# FASCICULE DE BREVET EUROPEEN

(11) **EP 1 877 491 B1**
(45) Date de publication et mention de la délivrance du brevet: **28.02.2018**
(21) Numéro de dépôt: 06726176.8
(22) Date de dépôt: 04.04.2006
(51) Int. Cl.: C08L 95/00, C08L 61/00, C08L 61/04, C08L 61/06, C08L 63/04

(54) **PRODUITS BITUMINEUX, LEUR MELANGE AVEC DES GRANULATS ET LEURS UTILISATIONS**
BITUMINÖSES PRODUKT, MISCHUNG DAVON MIT ZUSCHLÄGEN UND VERWENDUNG DAVON
BITUMINOUS PRODUCTS, THE MIXTURE THEREOF WITH AGGREGATES AND THE USE THEREOF

(30) Priorité: 05.04.2005 FR 0503343
(43) Date de publication de la demande: 16.01.2008
(73) Titulaire: ARKEMA FRANCE, 92700 Colombes (FR)
(72) Inventeur: BARRETO, Gilles, F-69510 Messimy (FR); FRABOULET, Loïc, 92250 La Garenne Colombes (FR)
(74) Mandataire: Schaefer, Anne-Sophie
(86) Numéro de dépôt international: PCT/FR2006/000733
(87) Numéro de publication internationale: WO 2006/106222

(56) Documents cités:
- WO-A-02/00795
- WO-A-96/38519
- US-A- 4 260 019
- US-A- 4 415 682
- US-A- 4 604 188
- US-A- 4 949 743
- US-A- 5 354 504
- US-A- 5 611 869
- US-A- 5 635 549

## Description

La présente invention concerne le domaine de l'étanchéité, la construction et l'entretien de tapis routiers, de trottoirs et pistes d'aviation où l'on utilise des mélanges de granulats et de produits bitumineux.

On entend par produits bitumineux le bitume naturel ou les bitumes issus d'une huile minérale. Les bitumes obtenus par craquage et les goudrons sont aussi ici considérés, ainsi que les mélanges qui peuvent en résulter. Les résidus de distillation sous vide, de distillation, de précipitation (comme par exemple au propane), les bitumes soufflés sont des exemples considérés dans le cadre de cette invention. On considère également ici les bitumes dilués à l'aide de solvants pétroliers ou d'huiles végétales et les bitumes polymères. On entend dans la présente invention par granulats des matériaux divisés produits en carrière, des agrégats d'enrobés, des fraisats, des machefers, des scories et des laitiers ainsi que des recyclats de démolition du béton.

De nombreux procédés de production des mélanges de granulats et de produits bitumineux sont actuellement utilisés dans ce domaine, que l'on peut classer ici en trois classes distinctes : les procédés de production à température ambiante, les procédés à une température supérieure à 100°C et les procédés à des températures intermédiaires, c'est-à-dire pour lesquels un apport d'énergie thermique à la production de l'enrobé est nécessaire tout en permettant la présence d'eau liquide

Les procédés de production à température ambiante sont ceux pour lesquels la production du mélange entre liant bitumineux et granulats se fait sans apport d'énergie thermique. On peut citer l'enrobage de granulats à l'aide de bitume additivé d'un solvant volatil de manière à le rendre suffisamment fluide à température ambiante pour permettre un bon enrobage des granulats. L'enrobé est par la suite mis en oeuvre à l'aide du matériel adapté permettant le transport, la dépose et le compactage. Cette technique tend à disparaître car elle consomme des solvants en quantités importantes, solvants qui en étant évaporés dans l'atmosphère créent une pollution évitable par d'autres techniques. On peut citer également les techniques de production utilisant comme vecteur du bitume les émulsions ou dispersions de bitume dans un solvant aqueux. L'émulsion ou dispersion de bitume est mélangée avec le granulat de manière à assurer un bon enrobage. Le mélange obtenu est ensuite mis en oeuvre à l'aide du matériel adapté permettant le transport, la dépose et le compactage éventuel. Ces techniques ont l'avantage de concentrer la phase où de fortes températures sont rencontrées dans une usine où a lieu la fabrication de l'émulsion. Le granulat utilisé à température ambiante peut contenir de l'eau. Ces techniques ne nécessitent donc pas de traitement thermique du granulat, ce qui limite la consommation d'énergie lors de la production de l'enrobé et la production de poussières. De plus, le mélange étant à température ambiante, c'est à dire entre environ 5°C et 30°C, les émissions de composés organiques volatils sont très faibles. Cependant, les performances mécaniques obtenues avec ces mélanges sont en retrait par rapport à celles obtenues avec d'autres techniques décrites plus bas, notamment au jeune âge lorsque le mélange n'a pas diminué et stabilisé sa teneur en eau. Cette technique a trouvé son créneau dans l'entretien routier pour des chaussées faiblement à moyennement sollicitées qui sont souvent associées à des supports souples.

Les procédés à température supérieure à 100 °C utilisent le bitume sous forme anhydre, dans un état de fluidité suffisant pour assurer un bon enrobage des granulats. De manière à assurer un bon enrobage et de bonnes performances mécaniques finales, il est classique de sécher les granulats et de les porter à une température proche de celle du bitume. Il existe deux types principaux de procédés, les procédés continus et discontinus. Pour le premier type, les granulats entrent de manière continue dans un cylindre possédant un brûleur qui permet le chauffage des granulats par rayonnement de flamme. Dans une zone du cylindre non exposée au rayonnement, les granulats venant de la zone de séchage sont enrobés par le bitume liquide avant de sortir et d'être acheminés vers une trémie de stockage tampon. Dans le procédé discontinu, on dispose d'un malaxeur maintenu à haute température dans lequel sont versés de manière discontinue les différentes fractions granulométriques du granulat. Celles-ci sont homogénéisées par malaxage puis le bitume est rajouté par versement. A la suite du malaxage, le mélange entre granulats et produit bitumineux obtenu peut être stocké en trémie. Le mélange obtenu est ensuite mis en oeuvre à l'aide du matériel adapté permettant le transport, le répandage et le compactage éventuel. Le mélange obtenu est transporté et déposé suffisamment chaud de manière à assurer un bon répandage, un bon lissage et un bon compactage éventuel. Le choix des températures du procédé dépend de la classe du bitume. Pour les bétons bitumineux et les graves bitume par exemple, les températures des mélanges entre granulats et produits bitumineux en sortie de centrale, avec un bitume pur de pénétrabilité 35/50, sont généralement de 150 à 170 °C, voire de 160 à 180 °C quand les conditions météorologiques sont plus dures et pour le répandage la température des mélanges entre granulats et produits bitumineux est supérieure à 130°C. La norme française NF P 98-150 de décembre 1992 constitue la référence sur l'exécution des corps de chaussées, couches de liaison et couche de roulement en enrobés hydrocarbonés, la norme française NF P 98-130 de novembre 1999 constitue la référence pour les bétons bitumineux semi-grenus et la norme française NF P 98-138 de novembre 1999 constitue la référence pour les graves bitume. Elles imposent une température en sortie de centrale de 150 à 170°C et une température de répandage de 130°C minimum pour un bitume pur de pénétrabilité 35/50. Il n'y a pas de contrainte sur la température de compactage, mais celui-ci est effectué immédiatement après le répandage du mélange de manière à avoir la température de début de compactage la plus proche possible de la température du mélange au répandage. C'est en effet le maintien du bitume dans un état suffisamment liquide et donc sufisamment chaud qui permet de conserver une fluidité suffisante de l'enrobé pour réaliser correctement ces opérations.

Ces deux procédés d'enrobage à chaud, qui utilisent des centrales continues ou discontinues, sont les plus employés si l'on considère le tonnage de bitume consommé à l'échelle mondiale, que ce soit en construction routière, en entretien routier ou dans l'étanchéité. Ils font référence dans l'état actuel de l'art. Ce sont en effet les deux procédés les plus robustes à l'échelle industrielle. Comme pour toutes les techniques présentées ici, il est nécessaire de contrôler précisément la granulométrie des granulats, la qualité du bitume qui doit respecter des normes déterminées par pays, et la qualité du procédé représentée entre autres par la qualité du malaxage déterminée par la géométrie de la zone de malaxage, par l'énergie de malaxage, par les vitesses des parties mobiles ainsi que par les différents temps du procédé. Peu de paramètres spécifiques doivent être contrôlés en plus pour assurer le bon déroulement des opérations et on constate que le comportement de l'enrobé reste assez stable en présence de fluctuations. Le simple contrôle supplémentaire de la température des granulats et du bitume au moment de la production et de l'enrobé au répandage permet d'assurer un bon déroulement des opérations. Si l'on veut faire la comparaison, les techniques à température ambiante décrites plus haut nécessite le contrôle supplémentaire de paramètres tels que le pH, la teneur en eau, la teneur et la nature chimique en additifs, la position d'ajout de ces additifs, la nature chimique du granulat et son âge parfois.

Cependant ces deux procédés de fabrication à température supérieure à 100 °C décrits ci-dessus de mélanges bitumineux ne sont pas exempts de défauts :
- Le chauffage et le séchage des granulats conduisent à une consommation importante de combustible d'origine fossile, donc non renouvelable. Lorsqu'on analyse le procédé du point de vue thermique, on se rend compte que seul le bitume est initialement chaud à l'entrée de la centrale d'enrobage, les granulats, qui constituent 90 à 96% de la masse de l'enrobé, sont à température ambiante. On passe par la phase de chauffage temporaire des granulats de manière à assurer un enrobage de bonne qualité avec le bitume et de manière également à permettre une bonne mise en oeuvre. Par contre, le produit mis en place n'acquiert ses performances intéressantes qu'une fois refroidi. Toute l'énergie dépensée est finalement libérée dans l'atmosphère. D'après la publication de Colas « La route écologique du futur. Analyse du cycle de vie » par M. Chappat et J. Bilal, cette quantité d'énergie est de l'ordre de 300 MJ par tonne de béton bitumineux, ce qui représente plus de 40% de la facture énergétique jusqu'à sa mise à disposition du produit au le public.
- De manière concomitante sont générées de grandes quantités de gaz à effet de serre (GES) et de poussières partiellement collectées et réinjectées dans le circuit d'enrobage. La mise en oeuvre elle-même conduit à l'émission de composés organiques volatils sur le site de répandage, qui ont une action sur l'effet de serre. Il est possible d'associer des dispositifs de captage sur finisseur, mais cela nécessite le rééquipement des ateliers de mise en oeuvre actuels et n'élimine pas les émissions en provenance du tapis posé en aval du finisseur et augmente le prix du produit final.
- Les conditions de travail sont difficiles à cause du rayonnement thermique et des émissions gazeuses.
- Lorsque, pour des raisons non maîtrisables comme une dégradation des conditions météorologiques, la venue de la nuit, le rallongement de la durée de transport par exemple, la température du mélange bitumineux fabriqué préalablement baisse en dessous d'une certaine limite, celui-ci ne peut plus être mis en place correctement ce qui conduit à des défauts de porosité et de performances mécaniques. La robustesse du procédé est limitée. Pour se prévaloir de cet effet, il est courant de produire l'enrobé à des températures supérieures à celles préconisées dans les textes officiels, ce qui revient à renforcer les trois premiers défauts cités.

Afin de diminuer l'amplitude des défauts cités ci-dessus, on peut envisager de diminuer la température de fabrication du mélange bitumineux, ainsi, on réduit la consommation de combustible nécessaire au chauffage des composants de l'enrobé, la production de gaz à effet de serre et la gêne occasionnée lors de la mise en oeuvre de l'enrobé, tout en essayant de modifier le moins possible le procédé de fabrication de l'enrobé par rapport aux procédés à température supérieure à 100 °C, et ce, notamment dans le but de minimiser les coûts.

Il est en effet connu que l'émission de composés organiques volatils est liée à la température de la source, par des phénomènes qui seraient activés thermiquement : plus la température de la source est basse, moins les émissions sont importantes. De même, l'émission des poussières décroît avec la température.

### Art antérieur

Des solutions sont proposées dans la littérature pour réduire les quatre défauts cités ci-dessus des procédés d'enrobage à température supérieure à 100 °C.

Outre certaines de ces solutions qui concernent des procédés dont les températures de production sont supérieures à 100 °C, on trouve des solutions techniques qui consistent à diminuer la température de fabrication de l'enrobé.

Dans US 6.588.974, sont ajoutées des paraffines de manière à obtenir une viscosité du bitume acceptable pour l'enrobage à plus basse température, la réduction étant de l'ordre de 30°C. Les paraffines utilisées jouent le rôle de fluidifiant du bitume. A température constante, cela permet d'améliorer le compactage. En même temps, elles permettent une amélioration de certaines propriétés mécaniques du mélange entre granulats et produit bitumineux, comme la résistance à l'orniérage. Cependant, l'ajout des paraffines conduit à un changement de classe de bitume et peut conduire au dépassement du seuil normalisé de teneur en paraffines des bitumes. De manière concomitante, il existe un fort risque de dégradation du comportement à froid de l'enrobé, par augmentation de sa fragilité, c'est-à-dire par baisse de l'énergie de fracture lors d'un retrait empêché et par augmentation de la température de fracture. De plus, si la température de compactage est inférieure à la température de cristallisation des paraffines au sein du bitume, le compactage est beaucoup moins efficace.

Dans US 4.371.400, il est décrit l'utilisation d'une zéolithe pour améliorer la fluidité à chaud d'un enrobé bitumineux à très faible teneur en vide, tout en améliorant la résistance à l'enfoncement à 22 et 40°C.

Dans US 2004/0033.308, il est décrit l'utilisation de zéolithe, en particulier la zéolithe A, dans la production d'enrobé à chaud, ce qui permet de réduire les températures d'au moins 30 °C tout en conservant un comportement normal en aval de l'étape de malaxage en centrale. Cependant ce procédé n'est pas exempt de défauts : un tel procédé nécessite la présence d'un silo de stockage ainsi qu'un système d'ajout de la zéolithe. De plus, l'utilisation de zéolite à un dosage d'au moins 0,2 % par rapport au granulat représente un coût supplémentaire non négligeable. D'autre part, la fluidité de l'enrobé n'est conservée que lorsque la mousse existe au sein de l'enrobé, et cette dernière a une durée de vie limitée. En cas de temps de transport long par exemple, il existe un risque important de perte de fluidité consécutive à la disparition de la mousse.

Dans WO97/20890, est décrit un procédé de fabrication d'enrobés bitumineux pour lequel le mélange est effectué en deux parties. La première partie consiste à enrober les granulats avec un bitume très mou anhydre, le mélange obtenu étant entre 80 et 115 °C. La deuxième partie consiste à ajouter de la poudre de bitume dur en dessous de 50 °C. Outre les modifications nécessaires à apporter aux installations industrielles existantes pour pouvoir manipuler et ajouter la poudre de bitume, ce procédé a l'inconvénient de nécessiter du temps pour obtenir une bonne cohésion.

Dans EP 1.263.885 B1, sont, dans un premier temps, enrobés les granulats à 130 °C avec un liant mou anhydre à 120 °C, puis on ajoute, sous forme de mousse, du bitume dur et de la vapeur d'eau dans le malaxeur. L'enrobé obtenu est ensuite mis en oeuvre entre 70 et 100 °C. Ce procédé nécessite également du temps pour obtenir une bonne cohésion. De plus la pénétrabilité résiduelle obtenue après mélange entre les deux bitumes rend ce procédé inadéquat pour les pays tempérés ou chaud.

Dans EP 1 469 038 A1, sont enrobés dans un premier temps les gros granulats avec tout le bitume à une température supérieure à 130 °C, puis on injecte du sable humide non chauffé dans la centrale de malaxage, ce qui a l'avantage de limiter la consommation d'énergie. Au cours de la vaporisation de l'eau, on assure l'enrobage des éléments fins et de l'eau reste présente au sein de l'enrobé. L'enrobé se situe en sortie de centrale de malaxage à une température comprise entre 60 et 100 °C. Une variante proposée consiste à chauffer à 200 °C les gros granulats puis à les enrober avec tout le bitume et à injecter le sable humide non chauffé. Dans ce cas, l'eau est complètement éliminée et l'enrobage du sable est assuré par sa vaporisation. Dans la première variante, on cherche à maîtriser l'enrobage du sable par la vaporisation de son eau à l'état liquide initialement, ce qui a l'inconvénient d'être un phénomène fortement dépendant de la teneur en eau. De plus, il reste de l'eau dans l'enrobé qui est mis en place au sol, ce qui a l'inconvénient de le distinguer d'un enrobé à chaud de référence. Dans la seconde variante, on ne chauffe pas le sable, mais on le sèche au sein de la centrale de malaxage, par transfert de chaleur présente préalablement dans les gros granulats. A température constante d'enrobé en sortie de centrale, la quantité de chaleur nécessaire à l'obtention d'un enrobé anhydre selon cette demande de brevet est donc très proche de celle nécessaire à l'obtention d'un enrobé de référence.

Dans EP 1.323.867, on facilite l'enrobage de granulats froids par du bitume chaud en pré-traitant les granulats avec une émulsion aqueuse de fluxant et de dope d'adhésivité et en fluxant le bitume. L'utilisation de fluxant pose le problème de la cinétique de montée en cohésion qui est plus lente que celle obtenue par refroidissement dans le cadre d'une fabrication selon les procédés de référence.

Le document US 4 260 019 divulgue la récupération assistée de pétrole par injection, dans les réservoirs naturels souterrains, d'eau liquide et d'additifs. À la différence de l'invention revendiquée, l'eau liquide est injectée pour séparer le pétrole et les roches, alors que les produits bitumineux revendiqués sont anhydres, c'est-à-dire exempts d'eau ajoutée.

Le document US 4 949 743 concerne le domaine technique du raffinage des produits pétroliers et plus particulièrement de l'élimination des dépôts de catalyseur, de coke ou de composés asphaltiques en les fluidifiant. Le coke et les composés asphaltiques mis en oeuvre dans ce document sont différents des bitumes mis en oeuvre dans le cadre de la présente invention.

Le document WO200200795 divulgue l'utilisation de certains tensio-actifs pour la fabrication d'émulsions aqueuses de bitume permettant d'obtenir des enrobés dont le compactage et le drainage de l'eau de rupture sont particulièrement efficaces.

On constate ainsi que les solutions proposées pour limiter la température de fabrication dans les procédés de fabrication à chaud ont un impact négatif par ailleurs, parce qu'il faut adapter fortement l'unité industrielle de production et/ou parce que l'enrobé en lui-même perd certaines de ces propriétés.

### Résumé de l'invention

L'additivation du produit bitumineux ou de son mélange avec des granulats à l'aide d'additifs chimiques dosés entre 0,1 et 20 kg par tonne de produit bitumineux permet de baisser de manière surprenante la température de production des mélanges de granulats et de produit bitumineux d'une amplitude de 20 à 40 °C, la température du mélange entre granulat et produit bitumineux lors du répandage d'une amplitude de 10 à 40 °C et la température du mélange entre granulat et produit bitumineux à coeur au cours du compactage, quand il a lieu, d'une amplitude pouvant aller jusqu'à 50 °C, sans dégrader les propriétés normalisées du produit bitumineux et du mélange entre produit bitumineux et granulats, tout en conservant une conduite du procédé, depuis le transport jusqu'au compactage éventuel conforme à l'état de l'art, en dehors des considérations sur les températures ci-dessus décrites. Ces diminutions de températures s'entendent par rapport à la référence de l'état de l'art. La norme française NF P 98-150 de décembre 1992 constitue la référence sur l'exécution des corps de chaussées, couches de liaison et couche de roulement en enrobés hydrocarbonés, la norme française NF P 98-130 de novembre 1999 constitue la référence pour les bétons bitumineux semi-grenus et la norme française NF P 98-138 de novembre 1999 constitue la référence pour les graves bitume. A titre d'exemple pour un bitume de pénétrabilité 35/50, ces normes indiquent que les températures limites acceptables sont de 150 à 170 °C pour l'enrobage et que pour le répandage la température minimale de l'enrobé est de 130 °C.

Les avantages de l'invention par rapport à l'état de l'art sont listés ci-dessous et incluent notamment la limitation des quatre défauts cités plus haut lors de la mise en oeuvre des procédés de fabrication d'enrobés à des températures supérieures à 100 °C :
- diminution de la consommation de combustible fossile,
- diminution de l'émission de GES et de poussières,
- diminution de la pénibilité des travaux lors des opérations de répandage et de compactage,
- sécurisation des opérations de répandage et de compactage de l'enrobé vis-à-vis des conditions météorologiques,
- allongement du délai pendant lequel on peut utiliser l'enrobé après sa préparation,
- dans le cas où deux bandes d'enrobé sont déposées successivement et côte à côte, le joint les séparant est plus résistant et mieux fermé,
- le retrait thermique est plus limité ainsi que le risque de fissuration,
- l'oxydation du produit bitumineux est plus limitée, ce qui augmente la durée de vie du mélange produit bitumineux/granulats et facilite son recyclage.

### Exposé de l'invention :

La présente invention propose des produits bitumineux anhydres et mélanges de ces produits bitumineux avec des granulats, caractérisés en ce qu'ils contiennent un ou plusieurs additifs de la liste suivante :
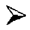 A le produit de la réaction de (di)alk(én)ylphénols sur aldéhydes, les aldéhydes comportant de 1 à 10 atomes de carbone et plus particulièrement de 1 à 5 atomes de carbone, suivie d'une (poly)oxyéthylation et/ou (poly)oxypropylation, les groupements alk(én)yl ayant entre 1 et 50 atomes de carbone et de préférence entre 2 et 20 atomes de carbone et pouvant être identiques ou différents dans le cas de dialk(én)ylphénols, la partie construite par (poly)oxyéthylation et/ou (poly)oxypropylation ayant une masse molaire supérieure ou égale à 45 g/mol et inférieure ou égale à 20.000 g/mol , le nombre de motifs phénoliques du produit A variant entre 3 et 50
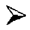 B copolymère 2,2-bis(4-hydroxyphényl)propane-épichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20.000 g/mol
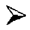 C copolymère bis(4-hydroxyphényl)éthane-épichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20.000 g/mol
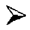 D copolymère bis(4-hydroxyphényl)méthane-épichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20.000 g/mol
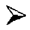 E le produit de la (poly)oxyéthylation et/ou (poly)oxypropylation d'un acide alkyldicarboxylique ou mélange d'acides alkyldicarboxyliques, les groupes alkyl ayant entre 1 et 20 atomes de carbone et préférentiellement entre 1 et 10, l'ensemble des parties construites par (poly)oxyéthylation et/ou (poly)oxypropylation ayant une masse molaire supérieure ou égale à 100 g/mol et inférieure ou égale à 20.000 g/mol
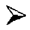 F le produit de la (poly)oxyéthylation et/ou (poly)oxypropylation d'un acide gras dont le nombre d'atomes de carbone est compris entre 10 et 30, et plus particulièrement de l'acide gras de tall oil, la partie construite par (poly)oxyéthylation et/ou (poly)oxypropylation ayant une masse molaire supérieure ou égale à 100 g/mol et inférieure ou égale à 20.000g/mol
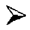 G le produit de la réaction entre le produit A et le mélange des produits E et F

Le produit A peut être obtenu de manière connue en utilisant une catalyse acide ou basique, et être utilisé directement ou après neutralisation du catalyseur.

L'additif ou le mélange d'additifs du produit bitumineux selon l'invention est soluble dans le produit bitumineux pour une concentration ramenée à la tonne de produit bitumineux comprise entre 0,1 et 20 kg.

Dans le cadre de la présente invention, les additifs cités ci-dessus peuvent être utilisés purs ou dilués à l'aide de solvants pétroliers et/ou d'huiles végétales.

La présente invention propose également d'utiliser un ou plusieurs dopes d'adhésivité conformes à l'état de l'art en complément, à un dosage ramené à la tonne de produit bitumineux compris entre 0,1 et 10 kg et ajouté selon une des manières décrites au paragraphe suivant. Par dopes d'adhésivité, on entend, les produits présentant une activité interfaciale et ajoutés dans le produit bitumineux pour améliorer la qualité d'enrobage du granulat par le produit bitumineux et/ou améliorer l'adhésivité du produit bitumineux sur le granulat et/ou améliorer les performances mécaniques du mélange entre le produit bitumineux et le granulat. On peut citer comme exemples non limitatifs de dopes d'adhésivité les alkylamidopolyamines, les alkylimidazolines et alkylimidazopolyamines, produits de réaction entre polyamines et acides carboxyliques gras, également les alkylpolyamines à chaînes grasses, également les produits de réaction entre acides carboxyliques gras ou huile végétale et diéthanolamine, suivie de la réaction avec des polyamines. Les polyamines peuvent être, à titre d'exemples non limitatifs, la diméthylaminopropylamine, la N-aminoéthylpipérazine, la diéthylènetriamine, la triéthylènetétramine, la tétraéthylènepentamine.

La présente invention concerne également le procédé de préparation des produits bitumineux, des enrobés obtenus à partir de mélange de ces produits bitumineux avec des granulats ainsi que les revêtements et tapis routiers préparés à partir de ces enrobés.

La présente invention propose également d'ajouter les additifs et dopes d'adhésivité ci-dessus décrits dans le produit bitumineux à un moment quelconque de la chaîne logistique depuis la raffinerie jusqu'au site du mélange du produit bitumineux et des granulats. Lorsque plusieurs additifs A à G selon l'invention et dopes d'adhésivité éventuels sont utilisés, on ne sortirait pas du cadre de la présente invention lorsque le mélange desdits additifs et dopes avec le produit bitumineux est réalisé en les ajoutant successivement, ou lorsqu'ils sont d'abord mélangés entre eux avant la mise en contact avec le produit bitumineux. Lors de l'additivation, la température du produit bitumineux est en général comprise entre 100 et 250 °C, selon la classe de pénétrabilité du produit bitumineux et selon sa température de ramollissement bille-anneau, et la température des additifs et dopes d'adhésivité éventuels est en général comprise entre la température ambiante et 200 °C, en tenant compte pour des raisons évidentes de sécurité du point éclair des additifs et dopes d'adhésivité. Dans le cas où le ou les additifs sont maintenus chauds, on peut avantageusement le(s) maintenir sous agitation pour éviter les points chauds et froids. Le ou les additifs et le ou les dopes d'adhésivité éventuels peuvent être ajoutés à l'état solide, soit par une opération mécanique manuelle, soit par l'utilisation d'un système de dosage adapté aux produits solides. Le ou les additifs et le ou les dopes d'adhésivité éventuels peuvent également être ajoutés à l'état liquide soit par versement dans une cuve contenant le produit bitumineux auquel cas une recirculation sur une durée en général d'au 15 min au minimum est nécessaire avant utilisation, soit par ajout sur un tuyau transportant le produit bitumineux. On peut équiper la tuyauterie transportant le produit bitumineux en aval du point d'injection d'un mélangeur statique pour faciliter la dispersion du ou des additifs. Dans le cas de l'ajout des additifs selon l'invention et de dopes d'adhésivité éventuels dans une cuve contenant le produit bitumineux, le produit bitumineux additivé est stockable de la même manière que le produit bitumineux non additivé, sans présenter d'inconvénient supplémentaire à cette étape du procédé. Le ou les additifs et le ou les dopes d'adhésivité éventuels peuvent également être pulvérisés sur le granulat chauffé, avant ou pendant l'ajout du produit bitumineux.

Selon l'invention, le mélange entre granulats et produit bitumineux peut être effectué à une température du granulat comprise entre 60 et 200 °C, mais est effectué préférentiellement entre 100 et 200 °C. Lors du mélange, la température du produit bitumineux est comprise entre 100 et 250 °C. Ces températures dépendent d'une part de la classe de pénétrabilité du produit bitumineux : plus celle-ci est basse et plus le produit bitumineux et le granulat doivent être chauds. Ces températures dépendent d'autre part de la température de ramollissement bille-anneau du produit bitumineux : plus celle-ci est élevée et plus le produit bitumineux et le granulat doivent être chauds

### Exemples

Dans les exemples suivants, l'additivation du bitume est effectuée à 160 °C, sur plaque chauffante avec agitation à 1 tr/s pendant 15 minutes.

Les mesures de pénétrabilité et de point de ramollissement bille-anneau des enrobés sont conformes aux s normes NF EN 1426 et respectivement NF EN 1427.

### Exemple 1

Un bitume dénommé TOTAL Azalt de pénétrabilité 35/50 provenant de la raffinerie de Donges a été additivé à l'aide des additifs suivants :
* Additif 1 (type F) : résultat de la condensation d'un copolymère d'oxyde d'éthylène et d'oxyde de propylène, de masse molaire M_{w} environ 4600 g/mol et de ratio molaire entre oxyde d'éthylène et oxyde de propylène compris entre 30/70 et 45/55, sur de l'acide gras de tall-oil, le ratio massique entre le copolymère et l'acide gras étant de 80/20, dans un solvant aromatique de coupe comportant 9 à 11 atomes de carbone et dont la teneur est de 60%.
Additif 2 (type G) On réalise le mélange en proportions 25/75 entre les résultats de deux réactions : la réaction de condensation d'un copolymère d'oxyde d'éthylène et d'oxyde de propylène, de masse molaire M_{w} environ 3800 g/mol et de ratio molaire entre oxyde d'éthylène et oxyde de propylène compris entre 20/80 et 10/90, sur de l'acide succinique, le ratio massique entre le copolymère et l'acide étant de 85/15 et le résultat de la réaction de condensation d'un copolymère d'oxyde d'éthylène et d'oxyde de propylène, de masse molaire M_{w} environ 4600 g/mol et de ratio molaire entre oxyde d'éthylène et oxyde de propylène compris entre 30/70 et 45/55, sur de l'acide gras de tall-oil, le ratio massique entre le copolymère et l'acide gras étant de 80/20. Ce mélange est ensuite dilué à 45% dans un solvant aromatique de coupe comportant 9 à 11 atomes de carbone. L'additif 2 est alors le résultat de la réaction du mélange ci-dessus décrit avec le produit A, le ratio massique entre le mélange et le produit A étant de 40/60. Le produit A est le résultat de la réaction du nonylphénol sur paraformaldéhyde en catalyse acide avec un ratio massique entre nonylphénol et paraformaldéhyde de 90/10, suivie de l'éthoxylation par 8 à 9 moles d'oxyde d'éthylène par noyau phénolique. Les réactions se font dans un solvant aromatique de coupe comportant 9 à 11 atomes de carbone et dont la teneur dans l'additif 2 est 60%.
Additif 3 dope d'adhésivité commercialisé par CECA sous le nom Cecabase 260, produit de la réaction entre une huile végétale et la diéthanolamine, la diéthylènetriamine et la triéthylènetétramine.

Les mesures de pénétrabilité et de point de ramollissement bille-anneau sont réunis dans le tableau suivant :

| N° | Nature de l'échantillon | Pénétrabilité (×0,1 mm) @ 25°C | Limites de pénétrabilité (×0,1 mm) | Point de ramollissement (° C) | Limites de point de ramollissement (°C) |
|---|---|---|---|---|---|
| 1 | Bitume pur | 37 | 35-50 | 53,5 | 50-58 |
| 2 | Bitume + Additif 1 à 5 kg/t | 37 | | 54 | |
| 3 | Bitume + Additif1 à 5 kg/t + Additif 3 à 2 kg/t | 36 | | 53 | |
| 4 | Bitume + Additif 2 à 5 kg/t | 39 | | 54 | |

Pour l'essai 3, l'Additif 3 est ajouté quelques minutes après avoir introduit l'Additif 1.

On constate que l'on reste dans la même classe de bitume. La viscosité dynamique a été mesurée à 110 °C et à un taux de cisaillement de 50 s⁻¹ sans constater d'écart significatif : la viscosité est égale à 3,7 Pa.s.

### Exemple 2

Un bitume TOTAL Azalt de pénétrabilité 35/50 provenant de la raffinerie de La Mède a été additivé à l'aide des additifs suivants :
Additif 4 (type A) : résultat de l'éthoxylation, à 4 moles d'oxyde d'éthylène par motif phénolique, du produit obtenu par la réaction du mélange de proportions comprises entre 70/30 et 55/45 nonylphénol/tertiobutylphénol sur paraformaldéhyde en catalyse basique et en solvant aromatique de coupe comportant 9 à 11 atomes de carbone, le ratio massique entre le mélange des phénols et le paraformadéhyde étant de 85/15.
Additif 5 (type A) : résultat de la réaction du nonylphénol sur paraformaldéhyde en catalyse acide, le ratio massique entre nonylphénol et paraformaldéhyde étant de 85/15, suivie de l'éthoxylation par 4 à 5 moles d'oxyde d'éthylène par noyau phénolique en solvant aromatique de coupe comportant de 9 à 11 atomes de carbone, la teneur en solvant étant de 50%.
Additif 6 (type B) : résine Epikote 828 propoxylée avec du polypropylèneglycol de masse molaire M_{w} d'environ 4000 g/mol, le ratio massique entre résine et polymère étant de 15/85.
Additif 7 (type E) : résultat de la réaction de condensation d'un copolymère d'oxyde d'éthylène et d'oxyde de propylène, de masse molaire M_{w} environ 3800 g/mol et de ratio molaire entre oxyde d'éthylène et oxyde de propylène étant compris entre 10/90 et 20/80, sur de l'acide succinique, le ratio massique entre le copolymère et l'acide étant de 95/5 en solvant aromatique de coupe comportant 9 à 11 atomes de carbone et dont la teneur est 50%.

Les mesures de pénétrabilité et de point de ramollissement bille-anneau sont réunis dans le tableau suivant :

| Nature de l'échantillon | Pénétrabilité (×0,1 mm) @ 25°C | Limites de pénétrabilité (×0,1 mm) | Point de ramollissement (°C) | Limites de point de ramollissement (°C) |
|---|---|---|---|---|
| Bitume pur | 43 | 35-50 | 51,5 | 50-58 |
| Bitume + Additif 4 à 5 kg/t | 43 | | 51,5 | |
| Bitume + Additif 5 à 5 kg/t | 45 | | 51,5 | |
| Bitume + Additif 6 à 5 kg/t | 46 | | 51 | |
| Bitume + Additif 7 à 5 kg/t | 48 | | 51,5 | |

On constate que l'on reste dans la même classe de bitume. La viscosité dynamique a été mesurée à 110 °C et à un taux de cisaillement de 50 s⁻¹ sans constater d'écart significatif : la viscosité est égale à 2,4 Pa.s.

### Exemple 3

Nous avons fabriqué sur une centrale fixe possédant un tambour sécheur-malaxeur, un Béton Bitumineux Semi-Grenu (BBSG) 0/10 de classe 3 en trois planches différentes, toutes trois possédant la formule granulaire suivante :

| | | |
|---|---|---|
| - filler calcaire | calcaire | 5% |
| - sable 0/2 | rhyolite | 34% |
| - granulat 2/6 | rhyolite | 12% |
| - granulat 6/10 | rhyolite | 49% |

Le bitume utilisé est un TOTAL Azalt 35/50, de caractéristiques suivantes : pénétrabilité 35-50, de densité 1,031, de point de ramollissement bille-anneau 50°C. La teneur en produit bitumineux est de 6,3 g pour 100 g de granulats. Pour les deux premières planches, le bitume a été utilisé pur. Pour la troisième planche, le bitume a été additivé avec les deux additifs suivants aux dosages respectifs de 3,7 et 1,3 kg par tonne de bitume :
Additif 8 (type E) : le résultat de la réaction de condensation d'un copolymère d'oxyde d'éthylène et d'oxyde de propylène, de masse molaire M_{w} environ 3800 g/mol et de ratio molaire entre oxyde d'éthylène et oxyde de propylène compris entre 10/90 et 20/80, sur de l'acide succinique, le ratio massique entre le copolymère et l'acide étant de 95/5 en solvant aromatique de coupe comportant 9 à 11 atomes de carbone et dont la teneur est 50%.
Additif 9 (type B) : condensat de polypropylèneglycol de masse molaire M_{w} environ 4000 g/mol sur la résine Epikote 828, le ratio massique entre polymère et résine étant de 85/15, suivie de l'éthoxylation avec un ratio massique entre le condensat et l'oxyde d'éthylène de 90/10.

L'additivation a été effectuée par le trou d'homme de la cuve de stockage du bitume. Le bitume ainsi additivé a été utilisé après 30 minutes de recirculation dans la cuve de stockage.

Lors de la production de l'enrobé, les températures suivantes ont été respectées :
- le granulat a été chauffé à 160 °C pour la première planche et 120 °C pour les deux planches suivantes
- le bitume a dans tous les cas été utilisé à 160°C.

Le répandage a été effectuée à l'aide d'un finisseur Marini MF905, dont la vitesse d'avancement était de 5 m/min et d'un compacteur Ammann AV95, dont la vitesse d'avancement était de 4 km/h. Le nombre de passes réalisées a été de 11, sous vibrations d'amplitude 0,62 mm et de fréquence 50 Hz. Lors du compactage, les températures du BBSG suivantes ont été respectées :
- sur bitume pur, à 135°C pour la première planche et 80°C pour la seconde planche
- sur bitume additivé à 80°C

Ont été mesurées, suite au chantier, la masse volumique apparente au gammadensimètre selon la norme NF P 98-241-1, la masse volumique apparente par pesée hydrostatique selon la norme NF P 98-250-6 et la profondeur moyenne de texture selon la norme NF EN 13036-1. Les porosités sont calculées à partir des masses volumiques gamma corrigées par les mesures en pesée hydrostatique. Les températures du BBSG ont été mesurées à coeur.

| Nature du bitume | T granulat à la production (°C) | T BBSG à la dépose (° C) | T BBSG au compactage (° C) | Profondeur moyenne de texture (mm) | Porosité moyenne (%) | Nombre de mesures de porosité au-dessus du seuil de 8% /nombre total de mesures de porosité |
|---|---|---|---|---|---|---|
| Bitume pur | 160 | 160 | 135 | 0,7 | 5,3 | 0/20 |
| Bitume pur | 120 | 120 | 80 | 0,8 | 7,2 | 5/16 |
| Bitume additivé | 120 | 120 | 80 | 0,8 | 6 | 0/15 |

Les profondeurs moyennes de texture sont toutes acceptables. Si l'on considère la porosité moyenne, on constate que le meilleur BBSG produit est celui qui constitue la référence. Par rapport aux limites de porosité pour les BBSG 0/10 de classe 3 qui sont de 4 et 8%, ce BBSG se situe en partie basse. Le BBSG produit en conditions thermiques de production dégradées sans additif a une porosité moyenne qui se rapproche de la limite haute. L'écart de porosité moyenne par rapport au BBSG de référence est réduit lorsque, malgré les conditions thermiques de production dégradées, on ajoute l'additif au bitume. La dernière colonne du tableau indique le nombre de points de mesures de porosité pour lesquels on est hors norme, par rapport au nombre total de mesures de porosité. On constate qu'il y a 5 points hors norme pour l'essai sans additif en conditions thermiques dégradées soit plus de 30% des mesures, dont un point pour lequel la porosité est égale à 10,2%. Il n'y a pas de point hors norme en présence de l'additif.

## Revendications

1. Produits bitumineux anhydres, **caractérisés en ce qu'**ils contiennent un ou plusieurs additifs suivants :
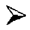 A le produit de la réaction de (di)alk(én)ylphénols sur aldéhydes, les aldéhydes comportant de 1à 10 atomes de carbone, suivie d'une (poly)oxyéthylation et/ou (poly)oxypropylation, les groupements alk(én)yl ayant entre 1 et 50 atomes de carbone, et pouvant être identiques ou différents dans le cas de dialk(én)ylphénols, la partie construite par (poly)oxyéthylation et/ou (poly)oxypropylation ayant une masse molaire supérieure ou égale à 45 g/mol et inférieure ou égale à 20.000g/mol, le nombre de motifs phénoliques du produit A variant entre 3 et 50
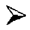 B copolymère 2,2-bis(4-hydroxyphenyl)propane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20.000g/mol
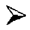 C copolymère bis(4-hydroxyphenyl)éthane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20.000g/mol
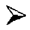 D copolymère bis(4-hydroxyphenyl)méthane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20.000g/mol
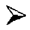 E le produit de la (poly)oxyéthylation et/ou (poly)oxypropylation d'un acide alkyldicarboxylique ou mélange d'acides alkyldicarboxyliques, les groupes alkyl ayant entre 1 et 20 atomes de carbone, l'ensemble des parties construites par (poly)oxyéthylation et/ou (poly)oxypropylation ayant une masse molaire supérieure ou égale à 100 g/mol et inférieure ou égale à 20.000g/mol
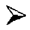 F le produit de la (poly)oxyéthylation et/ou (poly)oxypropylation d'un acide gras dont le nombre d'atomes de carbone est compris entre 10 et 30, la partie construite par (poly)oxyéthylation et/ou (poly)oxypropylation ayant une masse molaire supérieure ou égale à 100 g/mol et inférieure ou égale à 20.000g/mol
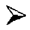 G le produit de la réaction entre le produit A et le mélange des produits E et F

2. Produits bitumineux selon la revendication 1 **caractérisés en ce que** l'additif ou le mélange d'additifs est à un dosage ramené à la tonne de produit bitumineux compris entre 0,1 et 20 kg.

3. Produits bitumineux selon la revendication 1 ou 2, **caractérisés en ce qu'**il contiennent un ou plusieurs dopes d'adhésivité, de préférence à un dosage ramené à la tonne de produit bitumineux compris entre 0,1 et 10 kg.

4. Procédé de préparation du produit bitumineux selon les revendications 1 à 3, **caractérisé en ce qu'**il comprend la mise en contact du ou des additifs avec le produit bitumineux à une température comprise dans la gamme de températures allant de 100 à 250 °C.

5. Mélanges des produits bitumineux tels que définis dans l'une quelconque des revendications 1 à 3 avec des granulats.

6. Procédé de préparation du mélange entre produit bitumineux et granulats selon la revendication 5, **caractérisé en ce qu'**on pratique un malaxage du produit bitumineux et granulats et **en ce que** la température des granulats est comprise dans la gamme de températures allant de 60 à 200 °C.

7. Procédé de préparation du mélange entre produit bitumineux et granulats selon la revendication 6, **caractérisé en ce que** le malaxage entre produit bitumineux et granulats est effectué à une température de granulats dans la gamme de températures allant de 100 à 200 °C.

8. Procédé de préparation du mélange entre produit bitumineux et granulats selon la revendication 6 ou 7, **caractérisé en ce que** le malaxage entre produit bitumineux et granulats est effectué à une température du produit bitumineux comprise dans la gamme de températures allant de 100 à 250 °C.

9. Procédé de préparation du mélange entre produit bitumineux et granulats selon l'une quelconque des revendications 6 à 8, **caractérisé en ce que** l'additif selon les revendications 1 à 3 est ajouté dans le malaxeur avant ou pendant l'ajout du produit bitumineux.

10. Utilisation des mélanges de produits bitumineux avec des granulats tels que définis à la revendication 5 pour l'étanchéité, la construction et l'entretien de tapis routiers, de trottoirs et pistes d'aviation.

## Patentansprüche

1. Wasserfreie bituminöse Produkte, **dadurch gekennzeichnet, dass** sie einen oder mehrere folgende Zusatzstoffe enthalten:
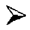 A das Produkt aus der Reaktion von (Di)alk(en)ylphenolen auf Aldehyden, wobei die Aldehyde 1 bis 10 Kohlenstoffatome aufweisen, gefolgt von einer Polyoxethylierung und/oder Polyoxypropylierung, wobei die Alk(en)ylgruppen zwischen 1 und 50 Kohlenstoffatomen aufweisen, und bei Dialk(en)ylphenolen gleich oder unterschiedlich sein können, wobei der durch Polyoxethylierung und/oder Polyoxypropylierung gebildete Teil eine molare Masse von größer gleich 45 g/mol und kleiner gleich 20.000 g/mol aufweist, wobei die Anzahl von Phenoleinheiten von Produkt A zwischen 3 und 50 liegt,
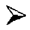 B polyoxethyliertes und/oder polyoxypropyliertes 2,2-bis(4-Hydroxyphenyl)propan-Epichlorhydrin-Copolymer, wobei der durch Polyoxethylierung und/oder Polyoxypropylierung gebildete Teil eine molare Masse von größer gleich 45 g/mol und kleiner gleich 20.000 g/mol aufweist,
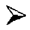 C polyoxethyliertes und/oder polyoxypropyliertes bis(4-Hydroxyphenyl)ethan-Epichlorhydrin-Copolymer, wobei der durch Polyoxethylierung und/oder Polyoxypropylierung gebildete Teil eine molare Masse von größer gleich 45 g/mol und kleiner gleich 20.000 g/mol aufweist,
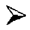 D polyoxethyliertes und/oder polyoxypropyliertes bis(4-Hydroxyphenyl)methan-Epichlorhydrin-Copolymer, wobei der durch Polyoxethylierung und/oder Polyoxypropylierung gebildete Teil eine molare Masse von größer gleich 45 g/mol und kleiner gleich 20.000 g/mol aufweist,
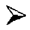 E das Produkt der Polyoxethylierung und/oder Polyoxypropylierung einer Alkyldicarbonsäure oder Mischung von Alkyldicarbonsäuren, wobei die Alkylgruppen zwischen 1 und 20 Kohlenstoffatomen aufweisen, wobei die Gesamtheit der durch Polyoxethylierung und/oder Polyoxypropylierung gebildeten Teile eine molare Masse von größer gleich 100 g/mol und kleiner gleich 20.000 g/mol aufweist,
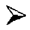 F das Produkt der Polyoxethylierung und/oder Polyoxypropylierung einer Fettsäure, deren Anzahl von Kohlenstoffatomen zwischen 10 und 30 liegt, wobei der durch Polyoxethylierung und/oder Polyoxypropylierung gebildete Teil eine molare Masse von größer gleich 100 g/mol und kleiner gleich 20.000 g/mol aufweist,
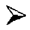 G das Produkt der Reaktion zwischen dem Produkt A und der Mischung der Produkte E und F.

2. Bituminöse Produkte nach Anspruch 1, **dadurch gekennzeichnet, dass** der Zusatzstoff oder die Mischung aus Zusatzstoffen eine zugemessene Menge bezogen auf eine Tonne bituminöses Produkt zwischen 0,1 und 20 kg aufweist.

3. Bituminöse Produkte nach Anspruch 1 oder 2, **dadurch gekennzeichnet, dass** sie einen oder mehrere Haftmittelzusätze enthalten, vorzugsweise in einer zugemessenen Menge bezogen auf eine Tonne bituminöses Produkt zwischen 0,1 und 10 kg.

4. Verfahren zur Herstellung des bituminösen Produkts nach den Ansprüchen 1 bis 3, **dadurch gekennzeichnet, dass** es die Kontaktierung des oder der Zusatzstoffe mit dem bituminösen Produkt bei einer Temperatur im Temperaturbereich von 100 bis 250 °C umfasst.

5. Mischungen der bituminösen Produkte nach einem der Ansprüche 1 bis 3 mit Zuschlägen.

6. Verfahren zur Herstellung der Mischung aus bituminösem Produkt und Zuschlägen nach Anspruch 5, **dadurch gekennzeichnet, dass** ein Vermischen des bituminösen Produkts und der Zuschläge vorgenommen wird, und dadurch, dass die Temperatur der Zuschläge im Temperaturbereich von 60 bis 200 °C liegt.

7. Verfahren zur Herstellung der Mischung aus bituminösem Produkt und Zuschlägen nach Anspruch 6, **dadurch gekennzeichnet, dass** das Vermischen des bituminösen Produkts und der Zuschläge bei einer Zuschlagtemperatur im Temperaturbereich von 100 bis 200 °C erfolgt.

8. Verfahren zur Herstellung der Mischung aus bituminösem Produkt und Zuschlägen nach Anspruch 6 oder 7, **dadurch gekennzeichnet, dass** das Vermischen des bituminösen Produkts und der Zuschläge bei einer Temperatur des bituminösen Produkts im Temperaturbereich von 100 bis 250 °C erfolgt.

9. Verfahren zur Herstellung der Mischung aus bituminösem Produkt und Zuschlägen nach einem der Ansprüche 6 bis 8, **dadurch gekennzeichnet, dass** der Zusatzstoff nach Anspruch 1 bis 3 vor oder während der Zugabe des bituminösen Produkts in den Mischer gegeben wird.

10. Verwendung der Mischungen von bituminösen Produkten mit Zuschlägen nach Anspruch 5 zur Abdichtung, zum Bau und zur Instandhaltung von Straßenbelägen, Gehwegen und Start- und Landebahnen.

## Claims

1. Anhydrous bituminous products, **characterized in that** they contain one or more of the following additives:
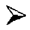 A: the product resulting from the reaction of (di)alk(en)yl phenols on aldeydes, the aldehydes having from 1 to 10 carbon atoms, followed by a (poly)oxyethylation and/or (poly)oxypropylation, the alk(en)yl groups having between 1 and 50 carbon atoms and being able to be identical or different in the case of dialk(en)yl phenols, the part formed by (poly)oxyethylation and/or (poly)oxypropylation having a molar mass of not less than 45 g/mol and not more than 20,000 g/mol, the number of phenolic units of product A varying between 3 and 50;
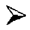 B: a (poly)oxyethylated and/or (poly)oxy-propylated 2, 2-bis(4-hydroxyphenyl)propane/ epichlorohydrin copolymer, the part formed by (poly)oxyethylation and/or (poly)oxypropylation having a molar mass of not less than 45 g/mol and not more than 20,000 g/mol;
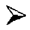 C: a (poly)oxyethylated and/or (poly)oxy-propylated bis(4-hydroxyphenyl)ethane/epichlorohydrin copolymer, the part formed by (poly)oxyethylation and/or (poly)oxypropylation having a molar mass of not less than 45 g/mol and not more than 20,000 g/mol;
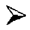 D: a (poly)oxyethylated and/or (poly)oxy-propylated bis(4-hydroxyphenyl)methane/epichlorohydrin copolymer, the part formed by (poly)oxyethylation and/or (poly)oxypropylation having a molar mass of not less than 45 g/mol and not more than 20,000 g/mol;
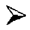 E: the product resulting from the (poly)oxyethylation and/or (poly)oxypropylation of an alkyldicarboxylic acid or mixture of alkyldicarboxylic acids, the alkyl groups having between 1 and 20 carbon atoms, all the parts formed by (poly)oxyethylation and/or (poly)oxypropylation having a molar mass of not less than 100 g/mol and not more than 20,000 g/mol;
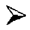 F: the product resulting from the (poly)oxyethylation and/or (poly)oxypropylation of a fatty acid, the number of carbon atoms of which is between 10 and 30, the part formed by (poly)oxyethylation and/or (poly)oxypropylation having a molar mass of not less than 100 g/mol and not more than 20,000 g/mol;
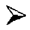 G: the product resulting from the reaction between product A and the mixture of products E and F;

2. Bituminous products according to Claim 1, **characterized in that** the additive or the additive mixture is introduced with a dosage with respect to one tonne of bituminous product of between 0.1 and 20 kg.

3. Bituminous products according to Claim 1 or 2, **characterized in that** they contain one or more adhesion dopes, preferably with a dosage with respect to one tonne of bituminous product of between 0.1 and 10 kg.

4. Process for producing a bituminous product according to Claims 1 to 3, **characterized in that** it includes bringing one or more additives into contact with the bituminous product at a temperature within the temperature range from 100 to 250°C.

5. Bituminous mixes obtained by mixing the bituminous products as defined in any one of Claims 1 to 3 with aggregates.

6. Process for producing bituminous mixes according to Claim 5, **characterized in that** the bituminous product and aggregates are mixed together and **in that** the temperature of the aggregates lies within the temperature range from 60 to 200°C.

7. Process for producing bituminous mixes according to Claim 6, **characterized in that** the mixing of the bituminous product with aggregates is carried out at an aggregate temperature lying within the temperature range from 100 to 200°C.

8. Process for producing bituminous mixes according to Claim 6 or 7, **characterized in that** the mixing of the bituminous product with aggregates is carried out at a bituminous product temperature lying within the temperature range from 100 to 250°C.

9. Process for producing bituminous mixes according to any one of Claims 6 to 8, **characterized in that** the additive according to Claims 1 to 3 is added to the mixer before or during the addition of the bituminous product.

10. Use of the bituminous mixes as defined in Claim 5 for the sealing, construction and repair of road carpets, pavements and aircraft runways.
